# EUROPEAN PATENT SPECIFICATION

(11) **EP 0 359 271 B1**
(45) Date of publication and mention of the grant of the patent: **16.03.1994**
(21) Application number: 89117061.5
(22) Date of filing: 14.09.1989
(51) Int. Cl.: C08G 18/50, C08G 18/10, C08G 18/32

(54) **Crosslinkable polyurethane rubbers containing polyoxyperfluoroalkylene blocks**
Poly(oxyperfluoralkyl(en)-Blöcke enthaltende vernetzbare Polyurethanelastomere
Elastomères réticulables de polyuréthane contenant des séquences de polyoxyperfluoroalcylène

(30) Priority: 15.09.1988 IT 2194788
(43) Date of publication of application: 21.03.1990
(73) Proprietor: AUSIMONT S.p.A., I-20121 Milano (IT)
(72) Inventor: Re, Alberto, Dr., I-20129 Milan (IT); Giavarini, Francesco, I-24060 Castelli Calepio Bergamo (IT); Cova, Cesare, I-21053 Castellanza Varese (IT)
(74) Representative: Barz, Peter, Dr.

(56) References cited:
- EP-A- 0 192 190
- FR-A- 2 453 871
- GB-A- 1 395 773
- US-A- 3 714 092

## Description

The present invention relates to crosslinkable polyurethane rubbers containing polyoxyperfluoroalkylene blocks.

One object of the present invention is to provide fluorinated polyurethanes having a glass transition temperature lower than -80°C, which are processable by means of the usual technology employed for conventional rubbers.

Polyurethanes (PU), which comprise polyoxyperfluoroalkylene blocks derived from perfluoropolyethers (PFPE) having hydroxylated end groups, are known.

Products of this type are described, in particular, in EP-A-192 190 and are characterized by a Tg of lower than -80°C, wherefore they retain flexibility and elastic properties even at very low temperatures.

The structure of these materials is free of stiff (rigid) segments. In order to give them mechanical strength, it is necessary to provide them with a threedimensional structure by crosslinking them either by means of trifunctional chemical agents or through the formation of allophanate or isocyanurate.

The materials thus obtained, however, do not possess an optimal combination of mechanical characteristics as regards hardness, tensile strength, modulus of elasticity and elongation. In particular, the hardness values are lower than 50 Shore A and the tensile strength values are generally lower than 10 kg/cm².

A substantial improvement in the combination of mechanical properties of said materials has been achieved by incorporating therein encumbering blocks consisting of aromatic or cycloaliphatic diols as described in EP-A-192 190. The resulting products, however, do not exhibit an optimal combination of properties. In particular, the fluorinated polyurethanes obtained according to said process are characterized by tensile strength values which, generally, do not exceed 25 kg/cm². Furthermore, the presence of aromatic diols in the structure is a limitation of the use of said products at high temperatures.

In these products, the modulus of elasticity undergoes considerable variations as a function of the temperature, showing very low values at temperatures close to the melting points.

Thus, an object of the present invention is to provide fluorinated polyurethanes having a Tg lower than -80°C and being characterized by satisfactory mechanical properties (high hardness and tensile strength values). The fluorinated polymers of the present invention are, furthermore, characterized by a dynamic mechanical spectrum which exhibits a constant trend of the modulus of elasticity in a wide temperature range and with high values.

Furthermore, the fluorinated polyurethanes of the present invention are processable according to the technology utilized for conventional rubbers (extrusion, injection moulding, calendering). In the known polyurethanes based on perfluoropolyethers, the above mechanical characteristics are difficult to be obtained with structures of the thermoplastic (thermoelastomeric) type, since these materials usually exhibit a softening point that is lower than that of the polyurethanes based on hydrogenated (non-fluorinated) polyols. The introduction of polyfunctional chemical agents allows this drawback to be overcome but limits the processability of these materials (processing according to RIM technology or by casting).

It has now, surprisingly, been found that it is possible to obtain the combination of properties described above by preparing polyurethanes having the particular structure described below.

The vulcanizable polyurethane elastomers of the present invention are high molecular weight polymers (preferably having a molecular weight of from 30000 to 200000), having an alternating block structure composed of straight stiff (rigid) segments and straight rubber-like segments and containing unsaturated groups which may give rise to crosslinks through the formation of radicals. Therefore, vulcanizing systems based on peroxides or sulphur or the irradiation by UV rays or electron beams are suitable for crosslinking said polyurethanes.

As explained above, these vulcanizable polyurethanes are processable according to the technology utilized for conventional rubbers.

As a consequence of the above vulcanization, fluorinated polyurethanes having an optimal combination of mechanical properties as indicated above, may, surprisingly, be obtained. In particular, the vulcanized products show the following favourable characteristics:
- Tg <-80°C, which means excellent elastic properties at very low temperatures;
- high hardness, ranging in particular from 50 Shore A to 75 Shore D;
- high tensile strength, higher than 30 kg/cm², in particular ≧ 40 kg/cm²;
- constant trend (limited variation) of the modulus of elasticity over a wide temperature range (-100 to +150°C), with values from 4 to 10 N/mm² in the range of from -100°C to +150°C.

The polyurethanes of the present invention, having a Tg of lower than -80°C, are characterized by:
A) Perfluoropolyether blocks (average number per polyurethane molecule preferably from about 3 to about 200), exhibiting an average molecular weight of from 1000 to 10000 and rubber-like (rubber-type) properties and being composed of sequences of fluorooxyalkylene units which are statistically distributed in the perfluoropolyether chain and preferably are selected from the following classes:
   I) (CF₂CF₂O) and (CF₂O);
   II) 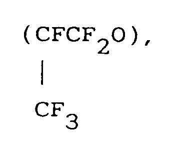 (CF₂CF₂O) and (CFXO), X being F or CF₃;
   III) (CH₂CF₂CF₂O) in structures represented by the following formula:

      -(OCF₂CF₂CH₂)ₚO R' _{f}O (CH₂CF₂CF₂O)_{q}-

      wherein R'_{f} is a fluoroaliphatic group (for example, a fluoroalkylene group) which, optionally, contains in the chain one or more (for example from 2 to 4) heteroatoms such as oxygen and nitrogen, said fluoroaliphatic group having in the chain from 1 to 21, preferably from 1 to 4 carbon atoms, particularly when R'_{f} is a fluoroalkylene group; and p and q are integers and (p+q) is >2; R_{f}, p and q being such that the molecular weight is in the range stated above;
   IV) 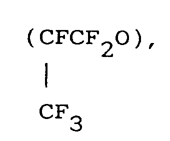 said units being bound to each other in the perfluoropolyether chain as follows: 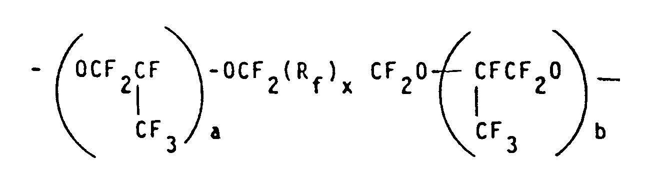 wherein R_{f} is a group as defined for class III, x is zero or 1, a and b are integers and (a+b) is >2; R_{f}, x, a and b being such that the molecular weight is in the range stated above.

   It is also possible to use diols with repeating units of formulae -CF₂CF₂O-, -CF₂CF₂CF₂O- and -CF(CF₃)CF₂O-. These products are obtainable by means of the scission process described in US-A-4 720 527.
   The perfluoropolyether blocks may result from the use of a perfluoropolyether diol and/or from the use of a perfluoropolyether diisocyanate, functional groups -OH or -NCO being at both ends.
B) Rigid segments, containing one or more olefinic double bonds and being derived (at least in part) from a short-chain (up to 14 carbon atoms) unsaturated diol. In particular, it is preferred to use (cis)-2-butene-1,4-diol, trimethylolpropane monoallylether and/or glycerin monoallylether. The average molecular weight of said rigid segments preferably is in the range of from 30 to 1000. Preferably the polyurethanes of the present invention contain from 30 to 800 of said rigid segments per molecule, the concentration of olefinic double bonds present therein preferably being such that the polyurethanes show an average number of double bonds per molecule in the range of from 30 to 200.

The rigid segments can, in part, also be derived from (short-chain) saturated (optionally fluorinated) diols. Examples of such saturated diols (which may contain aromatic and/or cycloaliphatic units) are ethylene glycol, 1,4-butanediol, 1,6-hexanediol, 1,4-di-β-hydroxyethylhydroquinone, 1,4-bis(hydroxymethyl)cyclohexane and telomers of C₂F₄ with both end groups being OH. The fluorinated diols may also contain one or two ether oxygen atoms. Generally, said saturated diols have from 2 to 20, particularly from 4 to 14 carbon atoms.

Moreover, the polymeric structure may also contain structural units of the stiff type derived from the use, as chain extender, of short-chain diamines (preferably having 0 to 18 carbon atoms) such as, for example, hydrazine, ethylenediamine, hexamethylenediamine, m-phenylenediamine and 3,3'-dichloro-4,4'-diaminodiphenyl methane.

In the preparation of the polyurethanes according to the present invention, examples of suitable diisocyanates are aliphatic diisocyanates (preferably having up to 12 carbon atoms in the basic structure), for example, hexamethylene diisocyanate; cycloaliphatic diisocyanates (preferably having up to 18 carbon atoms in the basic structure) such as 4,4'-dicyclohexylmethane diisocyanate, cyclohexyl-1,4-diisocyanate, isophorone diisocyanate; aromatic diisocyanates (preferably having up to 18 carbon atoms in the basic structure) such as toluene diisocyanate, xylylene diisocyanate, 4,4'-diphenylmethane diisocyanate; and fluorinated diisocyanates of the above types such as tetrafluorophenylene diisocyanate or 6-chloro-2,4,5-trifluorobenzene-1,3-diisocyanate.

In the preparation of the polyurethanes according to the present invention it is also possible to use, in admixture with the above saturated and unsaturated diols, polyether polyols and/or polyester polyols (i.e., α,ω-polyoxyalkylene-diols or α,ω-polyester-diols) such as, for example, polyethylene glycol, poly(propylene glycol), poly(tetramethylene glycol), poly(1,4-butanediol adipate), poly(1,6-hexanediol-1,4-butanediol adipate), poly(1,6-hexanediol-neopentyl glycol adipate), poly(ε-caprolactone) and poly(1,6-hexanediol carbonate).

### Synthesis of the polymeric products

The vulcanized fluorinated polyurethanes of the present invention may be prepared by starting from linear high molecular weight polyurethanes (preferably having a molecular weight of from 30000 to 200000), having the structure described above (in the following also referred to as linear polyurethanes) and containing double bonds of the olefinic type, which play an active role in the radicalic vulcanization. These polyurethanes are formulated with a proper crosslinking agent to provide a vulcanized finished product.

### Synthesis of the linear polymer

The linear polymer may be prepared by operating in two steps. The first step consists of preparing a prepolymer: The perfluoropolyether diol, dissolved in a suitable solvent is reacted with excess (non-fluorinated) diisocyanate, whereby an isocyanate-terminated prepolymer is obtained. This step can be omitted if a perfluoropolyether diisocyanate is utilized. The starting materials, i.e., the perfluoropolyether diols and perfluoropolyether diisocyanates, are compounds well-known in the art, see, for example, US-A-3 810 874.

The second step may be carried out by reacting the isocyanate prepolymer or the fluorinated diisocyanate having a PFPE structure with a mixture composed of:
- saturated diols and/or short-chain diamines, and
- short-chain unsaturated diols.

In said mixture the difunctional saturated compounds/unsaturated diols molar ratio may range from 0 to 10, preferably from 0 to 3.

The reaction may be conducted either in solution or in mass. In the former case, the solution of the isocyanate prepolymer or the perfluoropolyether diisocyanate dissolved in a suitable solvent is reacted, at 20 to 70°C for 1 to 8 hours, with the unsaturated diol or with the mixture of saturated compound(s) and unsaturated diols so that the ratio NCO/OH(NH) groups is equal to about 1. The progress of the reaction is followed by I.R. spectroscopy, monitoring the disappearance of the NCO band at 2270 cm⁻¹. Upon completion of the reaction, the polymer may be precipitated with excess H₂O and, after a few further washings with H₂O, filtered and dried under vacuum.

In the latter case, the isocyanate prepolymer, after removal of the solvent, or the fluorinated diisocyanate may be reacted, at 20 to 120°C for 1 to 8 hours, with the unsaturated diol or the mixture of saturated compound(s) and unsaturated diol already described herein in order to obtain a ratio NCO/OH(NH) groups ranging from 1 to 1.05. The reaction may be followed by means of I.R. spectroscopy, as described in the preceding step. At the end of the reaction, the highly viscous polymeric mass may be extruded and pelletized.

The efficiency of the linear polyurethane synthesis reaction can be increased by adding a suitable catalyst system, for example tin derivatives (such as dibutyl tin dilaurate, dibutyl tin acetate and dibutyl tin oxide), iron derivatives (such as iron acetylacetonate), titanium alcoholates (such as titanium tetraisopropylate) and tertiary amines (such as triethylamine and N-methyl morpholine), in amounts ranging from 0.001 to 2% by weight, preferably from 0.01 to 0.5% by weight, based on the total weight.

### Mixing and vulcanization

The urethane polymer thus obtained may be formulated with the crosslinking agent and, optionally, with other additives by using a calender or a closed mixer (Banbury).

The suitable amount of crosslinking agent varies as a function of the type of agent utilized:
- in the vulcanization with peroxides the amount of peroxide preferably ranges from 1 to 10 p.h.r., particularly from 2 to 5 p.h.r.;
- in the vulcanization with sulphur the amount thereof preferably ranges from 1 to 5 p.h.r., particularly from 1.5 to 2 p.h.r.

In the vulcanization with peroxides, the selection of the peroxide depends on the conditions and temperatures to be employed.

The most frequently utilized peroxides are:
2,5-dimethyl-2,5-di(tert-butylperoxy)hexane;
α,α′ -bis-(tert-butyl-peroxy)-diisopropylbenzene;
1,1-di(tert-butylperoxy)-3,3,5-trimethylcyclohexane;
di-tert-butylperoxide; dicumylperoxide.

The rate of the vulcanization reaction can be regulated by the addition of accelerants or retardants, depending on the processing requirements.

Crosslinking can also be achieved by treatment with ultra-violet rays or with an electron beam.

The fluorinated polyurethanes of the present invention are elastomers which are characterized, in the vulcanized state, by the following properties:
- excellent flexibility at very low temperatures, even lower than -100°C;
- resistance to hydrolytic degradation and to attack by most of the usual chemical agents, oils and fuels;
- good surface characteristics such as smoothness (self-lubrication) and oil- and water-repellency.

The fluorinated polyurethanes can be formulated by adding thereto, for example, conventional fillers and pigments, antioxidants, U.V. stabilizers and reinforcing fillers such as carbon black, stearic acid and graphite. Furthermore, since they have a sufficient fluorine content, they are compatible with fillers of the fluorinated polymer type, in particular polytetrafluoroethylene.

The fluorinated polyurethanes of the present invention are utilizable for structural elements such as gaskets, couplings, components for valves and fittings, insulating and protective membranes, adhesives and sealing materials, where very severe operating conditions are employed and, in particular, the elastomeric properties are to be retained at very low temperatures (arctic rubbers).

Possible applications of particular interest are, therefore, in industries such as aeronautical, aerospace, oil, chemical and the like.

Still another possible application of particular interest is the use for structural materials to be utilized in the biomedical sector, for the manufacture of artificial organs, artificial blood vessels, membranes, structural materials which must exhibit excellent mechanical properties, anti-thrombosis characteristics and resistance to degradation.

The following examples are given to illustrate the present invention without, however, limiting possible embodiments thereof.

The fluorinated polyurethanes described in the examples have been characterized according to the following standards:

| | |
|---|---|
| Hardness (Shore A) | ASTM 2240 |
| Tensile strength (T.S.) and 100% modulus (M 100%) | ASTM D 412 |
| Elongation at break (E.B.) | ASTM D 412 |
| ODR curve | ASTM D 2084. |

### Example 1

This example relates to the preparation of a high molecular weight linear polyurethane. The synthesis was conducted in two steps.
A) Synthesis of an NCO-terminated prepolymer by reaction of a PFPE diol with a diisocyanate
   A perfluoropolyether (Fomblin^{(R)}Z DOL) with -CH₂OH end groups, having an equivalent weight of 2103 and represented by formula:

   HOCH₂CF₂(CF₂CF₂O)ₘ(CF₂O)ₙCF₂CH₂OH

   (m/n = 0.7) was reacted with 4,4′-dicyclohexylmethane diisocyanate. The reaction was conducted in solution by dissolving 11 g of diisocyanate in 80 ml of Freon 113. The temperature was raised to 50°C and, in a nitrogen atmosphere, 89 g of diol were added dropwise. The reaction was continued at this temperature until the desired degree of conversion (1.78% by weight of NCO groups) was reached (about 4 hours). The reaction mixture was then cooled in order to stop the reaction.
B) Chain extension
   A solution of 100 g of prepolymer in 80 ml of Freon 113 was heated to 50°C in a nitrogen atmosphere. To this solution a solution of 1.9 g of cis-2-butene-1,4-diol in 20 ml of THF was added dropwise. The reaction was followed by means of I.R. spectroscopy, monitoring the disappearance of the -NCO band at 2270 cm⁻¹. After 8 hours, i.e., after the desired polymerization degree had been reached, the polymer was precipitated with H₂O in order to hydrolize the residual NCO end groups and to obtain a stable polymer. Thereby, a polymer in the form of a granular white solid was obtained.

### Examples 2 to 6

Following the procedure described in example 1, a series of linear polyurethanes was prepared.

As perfluoropolyether diols, the following ones were used:
- a PFPE (Fomblin^{(R)} Z DOL 4000) with -CH₂OH end groups and having an equivalent weight of 2103;
- a PFPE (Fomblin^{(R)} Z DOL 4000 Tx) with -CH₂CH₂OH end groups and having an equivalent weight of 2260.

As diisocyanates, the following compounds were used:
- 4,4′-dicyclohexylmethane diisocyanate (HMDI);
- isophorone diisocyanate (IPDI).

The chain extension was effected by using mixtures of 1,4-butanediol and cis-2-butene-1,4-diol having different percentage compositions.

Table 1 shows the various formulations, expressed in moles:

**TABLE 1**

| Examples | Z DOL 4000 | Z DOL 4000 Tx | HMDI | IPDI | BDO | BenDO |
|---|---|---|---|---|---|---|
| 1 | 1 | - | 2 | - | - | 1 |
| 2 | 1 | - | - | 2 | - | 1 |
| 3 | - | 1 | 2 | - | 0.5 | 0.5 |
| 4 | - | 1 | 2 | - | 0.25 | 0.75 |
| 5 | - | 1 | 1.6 | - | - | 0.6 |
| 6 | - | 1 | - | 2 | - | 1 |
| BDO = 1,4-butanediol BenDO = cis-2-butene-1,4-diol. | | | | | | |

### Examples 7 to 13

These examples illustrate the crosslinking of a series of polyurethanes according to the invention. The polyurethanes were prepared by formulating one of the linear polymers of the preceding examples with a peroxide in a calender or in a mixer.

As peroxides, the following compounds were used:
- α,α′-bis-(tert-butylperoxy)-m/p-diisopropylbenzene (Peroximon^{(R)} F/R);
- 1,1-di-(tert-butylperoxy)-3,3,5-trimethylcyclohexane (Peroximon^{(R)} S164/40P).

After having determined the crosslinking trend by means of the ODR curve, the samples were introduced into 120x120x2 mm moulds and then moulded by means of a plate press. The resulting small plates were utilized to determine the mechanical properties.

The data relating to the various formulations are reported in table 2.

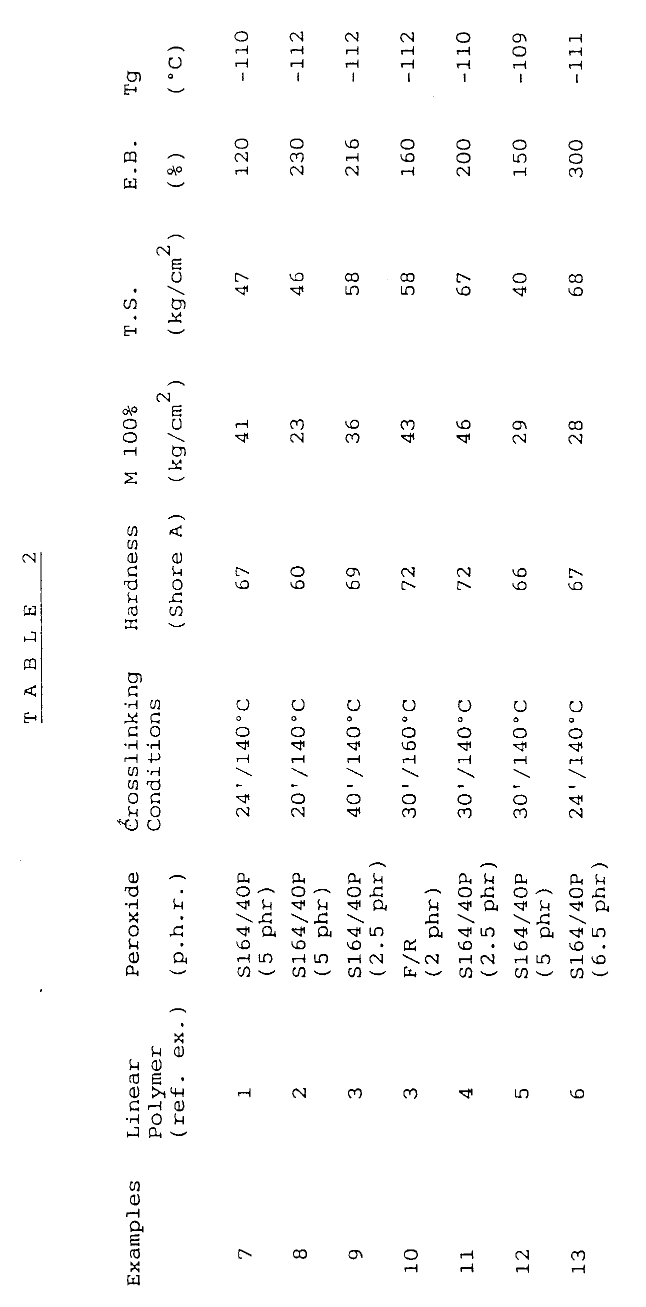

### Example 14

The modulus values as a function of the temperature, obtained from the dynamic-mechanical spectrum of the vulcanized polyurethanes according to examples 7 and 9, are reported below. Said values evidence a constant trend in a broad temperature range.

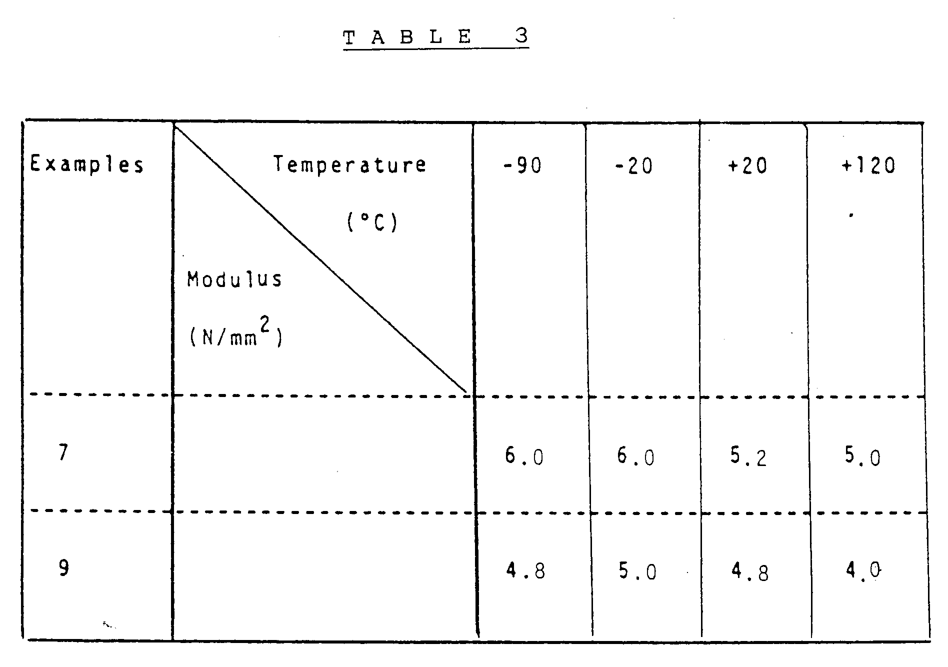

## Claims

1. Fluorinated polyurethanes having a glass transition temperature lower than -80°C and containing rubber-like perfluoropolyether blocks having an average molecular weight ranging from 1000 to 10000, alternating with rigid structural units, said rigid units being provided at least in part with olefinic double bonds which can give rise to crosslinking of the polymer chains in the presence of crosslinking systems of the radicalic type and being derived, at least in part, from an unsaturated diol having up to 14 carbon atoms, said polyurethanes being prepared by using aliphatic, cyclo-aliphatic and/or aromatic diisocyanates and/or perfluoropolyether diisocyanates.

2. Vulcanized polyurethanes obtained from polyurethanes according to claim 1 by use of vulcanizing agents selected from peroxides and sulphur or by means of treatment with U.V. rays or electron beams.

3. Polyurethanes according to any one of claims 1 and 2, wherein the perfluoropolyether blocks are composed of sequences of statistically distributed fluorooxyalkylene units selected from:
I) (CF₂CF₂O) and (CF₂O);
II) 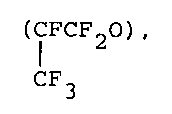 (CF₂CF₂O) and (CFXO), X being F or CF₃;
III) (CH₂CF₂CF₂O) in structures represented by the following formula:
-(OCF₂CF₂CH₂)ₚOR'_{f}O(CH₂CF₂CF₂O)_{q}-
wherein R'_{f} is a fluoroaliphatic group containing from 1 to 21 carbon atoms and, optionally, containing one or more heteroatoms in the chain and p and q are integers , (p+q) being >2, R_{f}, p and q being such that the molecular weight is in the range stated above;
IV) 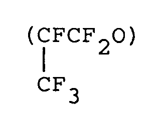 said units being linked to each other in the perfluoropolyether chain as follows: 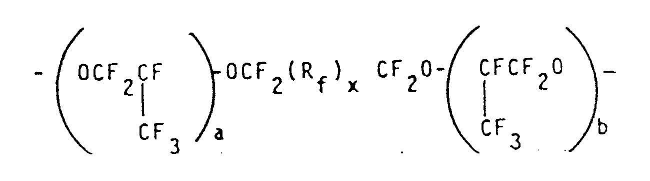 wherein R_{f} is a fluoroaliphatic group containing from 1 to 21 carbon atoms and, optionally, containing one or more heteroatoms in the chain, x is 0 or 1, a and b are integers and (a+b) is >2, R_{f}, x, a and b being such that the molecular weight is within the range stated above;
V) -CF₂CF₂O- or -CF₂CF₂CF₂O- or -CF(CF₃)CF₂O- units derived from corresponding perfluoropolyether diols.

4. Polyurethanes according to any one of claims 1 to 3, wherein the rigid units are additionally derived from a saturated diol and/or a short-chain diamine.

5. Polyurethanes according to any one of claims 1 to 4, wherein the rigid units containing double bonds result from the use of an unsaturated diol selected from 2-butene-1,4-diol, trimethylolpropane monoallylether and glycerin monoallylether.

## Patentansprüche

1. Fluorierte Polyurethane mit einer Glasübergangstemperatur unter -80°C und Kautschuk-ähnliche Perfluorpolyether-Blöcke mit einem durchschnittlichen Molekulargewicht im Bereich von 1000 bis 10000, alternierend mit starren Struktureinheiten, enthaltend, wobei diese starren Einheiten zumindest teilweise mit olefinischen Doppelbindungen, die in Anwesenheit von Vernetzungssystemen vom radikalischen Typ zur Vernetzung der Polymerketten Anlaß geben können, versehen sind und zumindest teilweise von einem ungesättigten Diol mit bis zu 14 Kohlenstoffatomen abgeleitet sind, wobei diese Polyurethane unter Verwendung von aliphatischen, cycloaliphatischen und/oder aromatischen Diisocyanaten und/oder Perfluorpolyether-Diisocyanaten hergestellt sind.

2. Vulkanisierte Polyurethane, erhalten aus Polyurethanen gemäß Anspruch 1 durch Verwendung von aus Peroxiden und Schwefel ausgewählten Vulkanisationsmitteln oder mit Hilfe einer Behandlung mit UV-strahlen oder Elektronenstrahlen.

3. Polyurethane nach irgendeinem der Ansprüche 1 und 2, in welchen die Perfluorpolyether-Blöcke zusammengesetzt sind aus Abfolgen von statistisch verteilten Fluoroxyalkylen-Einheiten, die ausgewählt sind aus:
I) (CF₂CF₂O) und (CF₂O);
II) 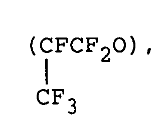 (CF₂CF₂O) und (CFXO), wobei X für F oder CF₃ steht;
III) (CH₂CF₂CF₂O) in durch die folgende Formel dargestellten Strukturen:
-(OCF₂CF₂CH₂)ₚOR'_{f}O(CH₂CF₂CF₂O)_{q}-
worin R'_{f} eine fluoraliphatische Gruppe ist, die 1 bis 21 Kohlenstoffatome enthält und gegebenenfalls ein oder mehrere Heteroatome in der Kette enthält und p und q ganze Zahlen sind, wobei (p+q) > 2 ist, wobei R_{f}, p und q derart sind, daß das Molekulargewicht im oben angegebenen Bereich liegt;
IV) 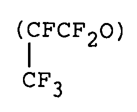 wobei diese Einheiten in der Perfluorpolyetherkette wie folgt miteinander verknüpft sind: 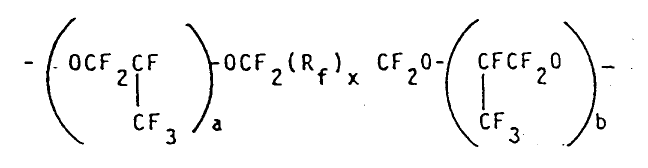 worin R_{f} eine fluoraliphatische Gruppe darstellt, die 1 bis 21 Kohlenstoffatome enthält und gegebenenfalls ein oder mehrere Heteroatome in der Kette enthält, x 0 oder 1 ist, a und b ganze Zahlen sind und (a+b) > 2 ist, wobei R_{f}, x, a und b derart sind, daß das Molekulargewicht im oben angegebenen Bereich liegt;
V) -CF₂CF₂O- oder -CF₂CF₂CF₂O- oder -CF(CF₃)CF₂O-Einheiten, die von entsprechenden Perfluorpolyetherdiolen abgeleitet sind.

4. Polyurethane nach irgendeinem der Ansprüche 1 bis 3, in welchen die starren Einheiten zusätzlich von einem gesättigten Diol und/oder einem kurzkettigen Diamin abgeleitet sind.

5. Polyurethane nach irgendeinem der Ansprüche 1 bis 4, in welchen die starren, Doppelbindungen enthaltenden Einheiten von der Verwendung eines aus 2-Buten-1,4-diol, Trimethylolpropanmonoallylether und Glycerinmonoallylether ausgewählten ungesättigten Diols herrühren.

## Revendications

1. Des polyuréthanes fluorés ayant une température de transition vitreuse inférieure à -80°C et contenant des séquences de perfluoropolyéther du type caoutchouc ayant des poids moléculaires moyens allant de 1000 à 10 000, en alternance avec des unités structurales rigides, lesdites unités rigides étant fournies au moins en partie par des doubles liaisons oléfiniques qui peuvent produire la réticulation des chaînes polymères en présence de systèmes de réticulation de type radicalaire, et étant dérivés, au moins en partie, d'un diol insaturé présentant jusqu'à 14 atomes de carbone, lesdits polyuréthanes étant préparés en utilisant des diisocyanates aliphatiques, cycloaliphatiques et/ou aromatiques, et/ou des perfluoropolyéthers diisocyanates.

2. Des polyuréthanes vulcanisés obtenus à partir de polyuréthanes selon la revendication 1, en utilisant des agents de vulcanisation choisis parmi les peroxydes et le soufre, ou au moyen d'un traitement aux rayons UV ou avec un faisceau d'électrons.

3. Des polyuréthanes selon l'une quelconque des revendications 1 et 2, dans lesquels les séquences de perfluoropolyéthers sont composées des séquences d'unités de fluorooxyalkylène distribuées de manière statistique, choisies parmi:
I) (CF₂CF₂O) et (CF₂O);
II) 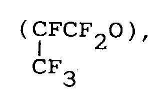 (CF₂CF₂O) et (CFXO), X étant F ou CF₃;
III) (CH₂CF₂CF₂O) dans les structures représentées par la formule suivante:
-(OCF₂CF₂CH₂)ₚO R'_{f}O (CH₂CF₂CF₂O)_{q}-
dans laquelle:
R'_{f} est un groupe fluoroaliphatique contenant de 1 à 21 atomes de carbone, et optionnellement, contenant un ou plusieurs hétéroatomes dans la chaîne, et
p et q sont des entiers, (p + q) étant supérieur à 2;
R'_{f}, p et q, étant tels que le poids moléculaire soit dans la gamme citée ci-dessus;
IV) 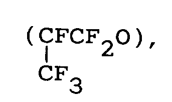 lesdites unités étant liées les unes aux autres dans la chaîne de perfluoropolyéther de la manière suivante: 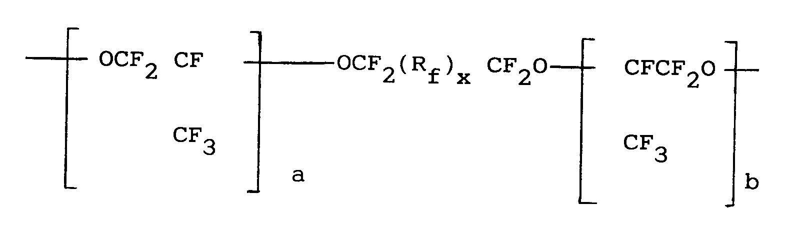 dans laquelle:
R_{f} est un groupe fluoroaliphatique contenant de 1 à 21 atomes de carbone, et optionnellement, contenant un ou plusieurs hétéroatomes dans la chaîne;
x est 0 ou 1;
a et b sont des entiers, et (a + b) est supérieur à 2;
R_{f}, x, a et b étant tels que le poids moléculaire se trouve dans la gamme citée ci-dessus;
V) unités -CF₂CF₂O-, -CF₂CF₂CF₂O- et -CF(CF₃)CF₂O- dérivées à partir des diols de perfluoropolyéthers correspondants.

4. Des polyuréthanes selon l'une quelconque des revendications 1 à 3, dans lesquels les unités rigides sont de plus dérivées d'un diol saturé et/ou d'une diamine à courte chaîne.

5. Des polyuréthanes selon l'une quelconque des revendications 1 à 4, dans lesquels les unités rigides contenant des doubles liaisons résultent de l'utilisation d'un diol insaturé choisi parmi: 2-butène-1,4-diol, triméthylolpropane monoallyléther et glycérine monoallyléther.
